# EUROPEAN PATENT SPECIFICATION

(11) **EP 3 819 015 B1**
(45) Date of publication and mention of the grant of the patent: **12.02.2025**
(21) Application number: 18925074.9
(22) Date of filing: 02.12.2018
(51) Int. Cl.: B01D 36/04

(54) **FILTERING DEVICE FOR EMERGENCY INJECTION WATER SYSTEM OF MAIN PUMP OF NUCLEAR POWER STATION**
FILTERVORRICHTUNG FÜR EIN NOTFALLEINSPRITZUNGSWASSERSYSTEM EINER HAUPTPUMPE EINES KERNKRAFTWERKS
DISPOSITIF DE FILTRAGE POUR SYSTÈME D'EAU D'INJECTION DE SECOURS DE LA POMPE PRINCIPALE DE LA CENTRALE NUCLÉAIRE

(30) Priority: 04.07.2018 CN 201810727607
(43) Date of publication of application: 12.05.2021
(73) Proprietor: China Nuclear Power Engineering Co., Ltd., Shenzhen, Guangdong 518124 (CN); Shenyang Blower Works Group Nuclear Pump Co. Ltd., Shenyang, Liaoning 110869 (CN)
(72) Inventor: CHEN, Xingjiang, Shenzhen, Guangdong 518124 (CN); LI, Zhongshuang, Shenzhen, Guangdong 518124 (CN); ZHANG, Yixun, Shenzhen, Guangdong 518124 (CN); SONG, Xiaowu, Shenzhen, Guangdong 518124 (CN)
(74) Representative: Greaves Brewster LLP
(86) International application number: PCT/CN2018/118807
(87) International publication number: WO 2020/006975

(56) References cited:
- CN-A- 101 066 812
- CN-A- 106 669 277
- CN-A- 108 889 028
- CN-U- 2 077 745
- CN-U- 201 592 006
- CN-U- 203 540 212
- CN-U- 205 235 583
- CN-Y- 2 609 635
- JP-A- 2011 083 697
- JP-U- 3 178 632

## Description

### FIELD OF THE INVENTION

The present invention generally relates to filtering devices and, more particularly, relates to a filtering device for emergency injection water system of main pump of nuclear power station.

### BACKGROUND OF THE INVENTION

Main pump is one of the key equipments of the primary circuit of a PWR nuclear power station. Reliable operation of the main pump plays a vital role in continuous and safe operation of the nuclear power station. For a shaft seal type main pump, a water-lubricated bearing and a shaft seal assembly are provided on the pump body. To ensure cooling and lubrication of the shaft seal assembly and the water-lubricated radial bearing, prevent high-temperature, high-pressure coolant from being conducted to the shaft system above the impeller, and make the water-lubricated radial bearing and the shaft seal assembly operate within an acceptable temperature range, a shaft seal injection water system is provided on the pump body. Under normal circumstances, the shaft seal injection water is provided by upper filling water from a chemical and volume control (RCV) system. In order to ensure normal operation of the main pump when the RCV shaft seal injection water fails, an emergency shaft seal injection water system is usually provided.

The emergency shaft seal injection water system takes water from the main pump housing, cools the water by an external heat exchanger, and injects the cooled water into the shaft seal chamber, so as to provide cooling and lubrication for the shaft seal components and water-lubricated bearings. The medium of the emergency shaft seal injection water system comes from the reactor coolant of the primary circuit which needs to be filtered before being injected into the shaft seal chamber.

A conventional emergency shaft seal water injection filtering device for a main pump adopts hydrocyclone separation technology and includes a container, a conical pipe, an overflow pipe, a cover plate and a sealing ring. The container is provided with an inlet port, an outlet port and a sewage outlet port. The inlet port and the outlet port are welded to the inlet and outlet pipelines respectively. The sewage outlet port is connected to the sewage pipeline through a flange, and an isolation valve is arranged on the sewage pipeline. The cover plate is assembled to the container by bolts. The upper portion of the container, the overflow pipe and the conical pipe jointly form a hydrocyclone seperator. The emergency injection water enters from the inlet along a tangential direction of the conical pipe and forms a swirling motion in the conical pipe. The part of the liquid containing fine particles flows out through the overflow pipe above the conical pipe, enters the upper chamber of the overflow pipe, and flows out along the horizontal discharge port in the chamber. Under the action of centrifugal force, the larger particles settle to the inner wall of the conical pipe. At the same time, due to the driving force of the pressure difference, part of the larger particles in the liquid is discharged from the lower end of the conical pipe into the chamber of the container. Solid particles and impurities are deposited in the container, and the deposits in the container are removed and cleaned regularly by opening the isolation valve on the sewage pipeline.

However, the conventional filtering device for emergency shaft seal injection water of main pump has the following disadvantages: 1) The sewage outlet port of the container is closed, the medium in the container is in a static state, and the effect of hydrocyclone separation is weakened; 2) In the initial stage, the hydrocyclone separation accuracy and efficiency are high. However, with the extension of use time, the concentration of solid particles and impurities in the container become higher and higher, the swirling flow produces a mixing effect in the container, and the solid cannot be deposited on the bottom of the container; 3) Hydrocyclone separator cannot play the role of hydrocyclone separation, thereby reducing the accuracy and efficiency of hydrocyclone separation greatly and, therefore, filtration can not be achieved. CN 2 077 745 U, CN 2 609 635 Y, CN 106 669 277 A and JP 2011 083697 A are relevant prior art documents.

In view of the foregoing, what is needed, therefore, is to provide a filtering device for emergency injection water system of main pump of nuclear power station which has compact structure, desirable safety and reliability, high separation accuracy and separation efficiency, and good settlement performance.

### SUMMARY OF THE INVENTION

One object of the present invention is to overcome the disadvantages of the prior art and provide a filtering device for emergency injection water system of main pump of nuclear power station which has compact structure, desirable safety and reliability, high separation accuracy and separation efficiency, and good settlement performance. The present invention is described by the subject-matter of claims 1-10.

According to one embodiment of the present invention, a filtering device for emergency injection water system of main pump of nuclear power station includes:
a pressure-bearing component comprising a seat, an upper seal head, a barrel and a lower seal head fixedly connected to each other in sequence from top to bottom, the seat defining a water inlet port, a water outlet port and an overflow port;
a cover plate being connected to a top of the seat, the cover plate and the seat jointly defining a chamber therebetween;
a sealing ring seated between the cover plate and the seat;
a conical pipe embedded in the seat and the upper seal head; and
a settling separation component in the barrel.

According to one aspect of the present invention, the settling separation component includes an umbrella-shaped sewage trap plate, a cone deflector and a filter screen, the umbrella-shaped sewage trap plate and the cone deflector are alternately arranged from top to bottom, the number of the umbrella-shaped sewage trap plates are at least one more than the number of the cone deflectors, and a filtering screen is seated below the lowest umbrella-shaped sewage trap plate.

According to one aspect of the present invention, the cone deflector is fixed to the barrel by welding, the umbrella-shaped sewage trap plate is provided with a number of outriggers, the lowest umbrella-shaped sewage trap plate is directly welded to the barrel through the outriggers, and the remaining umbrella-shaped sewage trap plates are welded to the cone deflector through the outriggers.

According to one aspect of the present invention, the water inlet port is connected with an inlet flange, the water outlet port is connected with an outlet flange, and a bottom of the lower seal head is connected with a sewage outlet flange.

According to one aspect of the present invention, the seat, the upper seal head, the barrel, the lower seal head, the inlet flange, the outlet flange, and the sewage outlet flange are welded to each other.

According to one aspect of the present invention, the inlet flange is connected with a flange of an emergency injection water pipeline, the outlet flange is connected with a flange of an outlet pipeline, and the sewage outlet flange is connected with a flange of a sewage pipeline.

According to one aspect of the present invention, an isolation valve is provided on the sewage pipeline and the isolation valve is in a closed state during normal operation.

According to one aspect of the present invention, the water inlet port has a rectangular structure, a vertical surface of the rectangular is tangent to inner wall of an annular groove in the seat, and the injected water passing through the annular groov enters the conical pipe to form a swirling motion.

According to one aspect of the present invention, the cover plate is assembled to the seat by bolts.

According to one aspect of the present invention, the lower seal head has a tapered structure.

According to one aspect of the present invention, the filter device is made from stainless steel.

Compared with the prior art, the filtering device for emergency injection water system of main pump of nuclear power station of the present invention has the following advantages:
1) Improving filtration accuracy and filtration efficiency;
2) Having compact structure and few components;
3) Due to the arrangement of the settling separation component, the collection and deposition of solid particles and impurities can be realized. When the sewage outlet port is closed, the separation and sedimentation effect is improved, and the decontamination and cleaning cycle of the filtering device is prolonged;
4) The pressure-bearing component of the filtering device adopts an integrated structure and different parts are welded to each other, and the integrity of the pressure boundary can be ensured.

### BRIEF DESCRIPTION OF THE DRAWINGS

The filtering device for emergency injection water system of main pump of nuclear power station of the present invention will now be described in detail with reference to the accompanying drawings, in which:
Fig. 1 is an examplary view of a filtering device for emergency injection water system of main pump of nuclear power station according to one embodiment of the present invention;
Fig. 2 is a cross-sectional view of a seat of the filtering device for emergency injection water system of main pump of nuclear power station according to one embodiment of the present invention;
Fig. 3 is a cross-sectional view of the filtering device for emergency injection water system of main pump of nuclear power station along a line A-A in Fig. 1;
Fig. 4 is a cross-sectional view of the filtering device for emergency injection water system of main pump of nuclear power station along a line B-B in Fig. 1; and
Fig. 5 is a working principle diagram of the filtering device for emergency injection water system of main pump of nuclear power station according to one embodiment of the present invention.
12-seat; 120-water inlet port; 121-annular groove; 122-water outlet port; 124-overflow port; 126-chamber; 14-upper seal head; 16-barrel; 18-lower seal head; 180-sewage outlet; 20-inlet flange; 22-outlet flange; 24- sewage outlet flange; 26-cover plate; 28-seal ring; 30-conical pipe; 32-settling separation component; 320-umbrella-shaped sewage trap plate; 322-cone deflector; 324-filter.

### DETAILED DESCRIPTION OF THE INVENTION

In order to make the objective, technical solutions and effects of the present invention clearer, the present invention will be further described in detail below in conjunction with accompanying drawings and embodiments. It should be understood that the embodiments described herein are only for explaining the present invention, not for limiting the scope of the present invention.

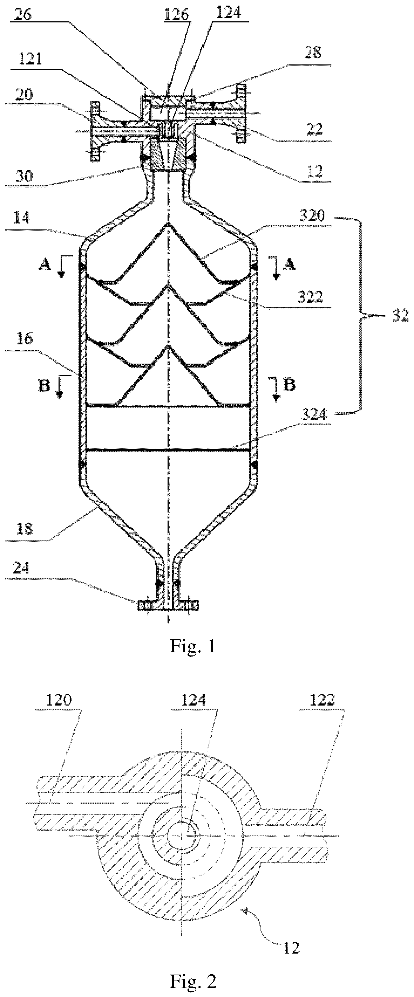

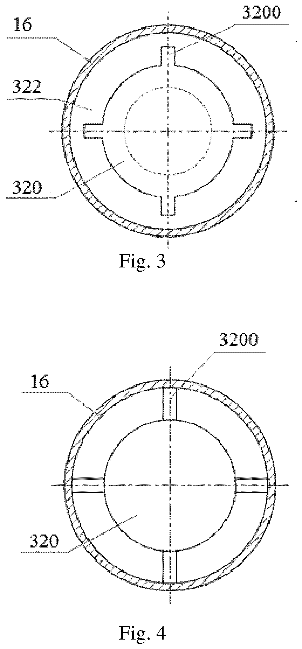

Referring to Figs. 1 to 5, the filtering device for emergency injection water system of main pump of nuclear power station of the present invention includes:
a pressure-bearing component including a seat 12, an upper seal head 14, a barrel 16 and a lower seal head 18 which are fixedly connected to each other in sequence, the seat 12 having a water inlet port 120, a water outlet port 122 and an overflow port 124, the water inlet port 120 being connected with an inlet flange 20, the water outlet port 122 being connected with an outlet flange 22, and the lower seal head 18 being fixedly connected with a sewage outlet flange 24 at a bottom thereof;
a cover plate 26 being fixedly connected to a top of the seat 12, the cover plate 26 and the seat 12 jointly defining a chamber 126 therebetween;
a sealing ring 28 seated between the cover plate 26 and the seat 12;
a conical pipe 30 being embedded in the seat 12 and the upper seal head 14; and
a settling separation component 32 in the barrel 16.

The seat 12, the upper seal head 14, the barrel 16, the lower seal head 18, the inlet flange 20, the outlet flange 22, and the sewage outlet flange 24 are welded to each other to form a pressure boundary of the filtering device.

Referring to Figs. 1 and 2, an annular groove 121 and an overflow port 124 are provided in the middle of the seat 12. The water inlet port 120 and the water outlet port 122 of the seat 12 extend to two sides of the seat 12, and the water inlet port 120 is located below the water outlet port 122. After the seat 12 and the inlet flange 20 are welded to each other, the water inlet port 120 communicates with the through hole of the inlet flange 20. After the seat 12 and the outlet flange 22 are welded to each other, the water outlet port 122 is communicated with the through hole of the outlet flange 22. The water inlet port 120 has a rectangular structure, and the vertical surface of the rectangle is tangent to the inner wall of the annular groove 121 of the seat 12.

The upper seal head 14 has a tapered structure. The upper part of the upper seal head 14 is welded to the lower part of the seat 12, and the lower part of the upper seal head 14 is welded to the upper part of the barrel 16. The lower part of the upper seal head 14 has an inner diameter corresponding to the outer diameter of the barrel 16.

The barrel 16 has a cylindrical structure. The upper part of the barrel 16 is welded to the lower part of the upper seal head 14, and the lower part of the barrel 16 is welded to the upper part of the lower seal head 18.

A sewage outlet 180 is provided at the bottom of the lower seal head 18 and is welded to the sewage outlet flange 24. The sewage outlet 180 communicates with the through hole of the sewage outlet flange 24. The lower seal head 18 has a tapered structure. The upper part of the lower seal head 18 has an inner diameter corresponding to the outer diameter of the barrel 16, and the width of the lower part of the lower seal head 18 is much smaller than the width of the upper part of the lower seal head 18, which can facilitate the settlement of solid particles and impurities at the lowest position.

The cover plate 26 is assembled to the seat 12 by bolts. A chamber 126 is formed between the cover plate 26 and the seat 12. In order to ensure air tightness, a sealing ring 28 is provided before the cover plate 26 is fixed to the seat 12. Then, the cover plate 26 is assembled to the seat 12 with bolts, to facilitate the washing and decontamination of the filtering device.

The conical pipe 30 is located in a circular chamber formed by the lower part of the seat 12 and the upper part of the upper seal head 14. The diameter and height of the circular chamber formed by the lower part of the seat 12 and the upper seal head 14 are corresponding to those of the conical pipe 30. The conical pipe 30 is connected to the seat 12 and the upper seal head 14 by interference fit. The upper diameter of the conical pipe 30 is correponding to the outer diameter of the annular groove 121 in the seat 12, and the upper part of the hole of the conical pipe 30 communicates with the overflow port 124 and the annular groove 121 of the seat 12 respectively, and the lower part of the conical pipe 30 communicates with the upper seal head 14. The top of the overflow port 124 communicates with the chamber 126 between the cover plate 126 and the seat 12, and the chamber 126 communicates with the water outlet port 122 of the seat 12. The injected water from the water inlet port 120 flows into the conical pipe 30 via the annular groove 121 to form a swirling motion.

The inlet flange 20 is connected to a corresponding flange of the emergency water injection pipeline (not shown), the outlet flange 22 is connected with a corresponding flange of the outlet pipeline (not shown), and the sewage outlet flange 24 is connected with a corresponding flange of the sewage pipeline (not shown). An isolation valve (not shown) is provided on the sewage pipeline (not shown). During normal operation, the isolation valve (not shown) is in a closed state.

Referring to Figs. 1, 3 and 4, the settling separation component 32 is arranged in the barrel 16, the upper part thereof does not exceed the welding point of the barrel 16 and the upper seal head 14, and the lower part thereof does not exceed the welding point of the barrel 16 and the lower seal head 18. The settling separation component 32 includes an umbrella-shaped sewage trap plates 320, a cone deflectors 322 and a filter screen 324. Each umbrella-shaped sewage trap plate 320 has a sharp top and a horizontally arranged bottom, and the width of the bottom is much larger than that of the top. The upper width of the cone deflector 322 is greater than the lower width of the cone deflector 322. The umbrella-shaped sewage trap plate 320 and the cone deflector 322 are alternately arranged from top to bottom, and the number of the umbrella-shaped sewage trap plates 320 is at least one more than the number of the cone deflectors 322. Umbrella-shaped sewage trap plates 320 are provided above and below the cone deflector 322. The filter screen 324 is arranged under the lowest umbrella-shaped sewage trap plate 320, and the position of the filter screen 324 does not exceed the welding point between the barrel 16 and the lower seal head 18. In other embodiments of the present invention, according to actual needs, the filter screen 324 can be arranged between the umbrella-shaped sewage trap plate 320 and the cone deflector 322, can be arranged under the umbrella-shaped sewage trap plate 320, or can be arranged below the cone deflector 322.

Specifically, when only one cone deflector 322 is provided, the arrangement of the components is as following: umbrella-shaped sewage trap plate 320, cone deflector 322, umbrella-shaped sewage trap plate 320, and filter screen 324. When the number of cone deflectors 322 is two, the arrangement is as following: umbrella-shaped sewage trap plate 320, cone deflector 322, umbrella-shaped sewage trap plate 320, cone deflector 322, umbrella-shaped sewage trap plate 320 and filter screen 324. When the number of cone deflectors 322 is multiple, umbrella-shaped sewage trap plates 320 and cone deflectors 322 are arranged alternately in turn, and the umbrella-shaped sewage trap plates 320 are arranged below to end the alternation. All the cone deflectors 322 are alternately arranged between the umbrella-shaped sewage trap plates 320, and a filter screen 324 is arranged at the lowest part.

The filter screen 324 has a round holes screen structure and is arranged at a position close to the barrel 16 and the lower seal head 18, and the filter screen 324 is welded to the inner wall of the barrel 16.

Preferably, the umbrella-shaped sewage trap plates 320 and the cone deflectors 322 are evenly arranged inside the barrel 16. The cone deflectors 322 are fixed on the barrel 16 by welding. The umbrella-shaped sewage trap plates 320 have a number of outriggers 3200. In the illustrated embodiment, four outriggers 3200 are evenly arranged. The lowest umbrella-shaped sewage trap plate 320 is dierectly welded to the barrel 16 through the outriggers 3200, and the remaining umbrella-shaped sewage trap plates 320 are welded to the cone deflector 322 via the outriggers 3200.

Assembly of the filtering device for emergency injection water system of main pump of nuclear power station of the present invention will be described with reference to Fig. 1, in which the order of steps 1) to 3) can be adjusted, and step 4) is finally completed.
Step 1): Fixing the umbrella-shaped sewage trap plates 320, the cone deflectors 322 and the filter screen 324 of the settling separation component 32 in the barrel 16;
Step 2): Installing the conical pipe 30 to the upper seal head 14 and installing the seat 12, welding the upper part of the upper seal head 14 to the lower part of the seat 12, and welding the inlet flange 20 and the outlet flange 22 to the seat 12;
Step 3): Welding the sewage outlet flange 24 to the lower part of the lower seal head 18;
Step 4): Welding the upper seal head 14 on the upper part of the barrel 16 and welding the lower seal head 18 on the lower part of the barrel 16.

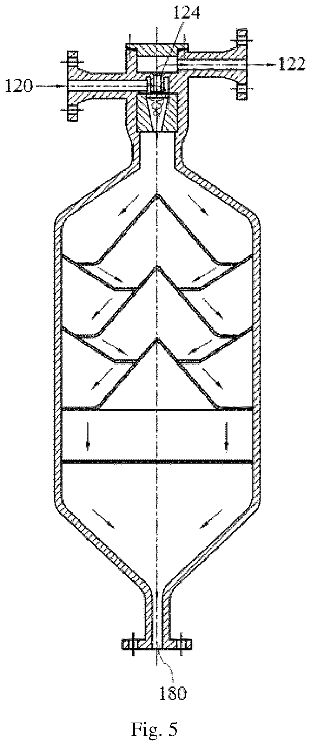

Referring to Figs. 1 and 5, working principle of the filtering device for emergency injection water system of main pump of nuclear power station of the present invention will be detailed as following:
The water inlet port 120 and the water outlet port 122 of the filtering device for emergency injection water system of main pump of nuclear power station are arranged horizontally, the overflow port 124 is arranged in the center of the seat 12, and an annular groove 121 is arranged in the middle of the seat 12. The outer diameter of the annular groove 121 and the inner diameter of the hole of the conical pipe 30 are the same. The emergency shaft seal injection water from the inlet flange 20 enters the conical pipe 30along the tangential direction of the inner wall of the annular groove 121 in the seat 12 under the action of the gravity and pressure to form a swirling motion. A part of the liquid containing trace fine particles flows vertically upwards through the overflow port 124 in the seat 12, enters the chamber 126 between the seat 12 and the cover plate 26, flows out horizontally from the outlet flange 22, and is injected into the shaft seal chamber (not shown), to provide shaft seal injection water for the shaft seal assembly of the main pump.

Under the action of the centrifugal force, the larger particles are settled toward the inner wall of the conical pipe 30. Due to the pressure difference, the larger particles along with the other part of the liquid is discharged from the lower end of the conical pipe 30 and enters the container welded by the upper seal head 14, the barrel 16 and the lower seal head 18. After entering the container, the liquid containing solid particles and impurities settles around the container under the action of the umbrella-shaped sewage trap plate 320, enters the cone deflector 322 to flow toward the center of the container, and passes through the umbrella-shaped sewage trap plate 320 and the cone deflector 322, thereby changing the flow direction many times, and finally flows through the filter screen 324 to the lower seal head 18 of the container.

Since the lower seal head 18 has a conical structure, solid particles and impurities finally settle at the lowest position. The settling separation component 32 changes the flow direction of the solid particles and impurities, prevents the medium from being mixed, prevents the solid particles and impurities from flowing upward, thereby improving the sedimentation and separation performance, and improving the separation accuracy and separation efficiency of the entire filtering device for emergency injection water system of main pump of nuclear power station. During normal operation, the isolation valve (not shown) on the sewage pipeline (not shown) is in a closed state. During the shutdown and refueling of the nuclear power station, solid particles and impurities are removed and cleaned.

It should be noted that all parts of the filtering device for emergency injection water system of main pump of nuclear power station are made from stainless steel.

In combination with the above description of the filtering device for emergency injection water system of main pump of nuclear power station of the present invention, it can be clearly seen that, compared with the prior art, the filtering device for emergency injection water system of main pump of nuclear power station of the present invention has the following advantages:
1) Improving filtration accuracy and filtration efficiency;
2) Having compact structure and few parts;
3) Due to the arrangement of the settling separation component 32, the collection and deposition of solid particles and impurities can be realized. When the sewage outlet is closed, the separation and sedimentation effect is improved, and the decontamination and cleaning cycle of the filtering device is prolonged;
4) The pressure-bearing component of the filtering device adopts an integrated structure and different parts are welded to each other, and the integrity of the pressure boundary can be ensured.

## Claims

1. A filtering device for emergency injection water system of main pump of nuclear power station, **characterized in that** the filtering device comprises:
a pressure-bearing component comprising a seat (12), an upper seal head (14), a barrel (16) and a lower seal head (18) fixedly connected to each other in sequence from top to bottom, the seat (12) defining a water inlet port (120), a water outlet port (122), and an overflow port (124) and an annular groove (121) both in a middle of the seat (12);
a cover plate (26) being connected to a top of the seat (12), the cover plate (26) and the seat (12) jointly defining a chamber (126) therebetween;
a sealing ring (28) seated between the cover plate (26) and the seat (12);
a conical pipe (30) embedded in the seat (12) and the upper seal head (14), an upper diameter of the conical pipe (30) being corresponding to an outer diameter of the annular groove (121) in the seat (12), an upper part of the hole of the conical pipe (30) communicating with the overflow port (124) and the annular groove (121) of the seat (12) respectively, and a lower part of the conical pipe (30) communicating with the upper seal head (14), and emergency shaft seal injection water from the inlet flange (20) entering the conical pipe (30) along a tangential direction of the inner wall of the annular groove (121) in the seat (12) under the action of the gravity and pressure to form a swirling motion; and
a settling separation component (32) in the barrel (16).

2. The filtering device for emergency injection water system of main pump of nuclear power station of claim 1, **characterized in that** the settling separation component (32) comprises an umbrella-shaped sewage trap plate (320), a cone deflector (322) and a filter screen (324), the umbrella-shaped sewage trap plate (320) and the cone deflector (322) are alternately arranged from top to bottom, number of the umbrella-shaped sewage trap plates (320) is at least one more than the number of the cone deflectors (322), and a filtering screen (324) is seated below lowest umbrella-shaped sewage trap plate (320).

3. The filtering device for emergency injection water system of main pump of nuclear power station of claim 2, **characterized in that** the cone deflector (322) is fixed to the barrel (16) by welding, the umbrella-shaped sewage trap plate (320) is provided with a plurality of outriggers (3200), lowest umbrella-shaped sewage trap plate (320) is directly welded to the barrel (16) through the outriggers (3200), and the remaining umbrella-shaped sewage trap plates (320) are welded to the cone deflector (322) through the outriggers.

4. The filtering device for emergency injection water system of main pump of nuclear power station of claim 1, **characterized in that** the water inlet port (120) is connected with an inlet flange (20), the water outlet port (122) is connected with an outlet flange (22), and a bottom of the lower seal head (18) is connected with a sewage outlet flange (24).

5. The filtering device for emergency injection water system of main pump of nuclear power station of claim 4, **characterized in that** the seat (12), the upper seal head (14), the barrel (16), the lower seal head (18), the inlet flange (20), the outlet flange (22), and the sewage outlet flange (24) are welded to each other.

6. The filtering device for emergency injection water system of main pump of nuclear power station of claim 5, **characterized in that** the inlet flange (20) is connected with a flange of an emergency injection water pipeline, the outlet flange (22) is connected with a flange of an outlet pipeline, and the sewage outlet flange (24) is connected with a flange of a sewage pipeline.

7. The filtering device for emergency injection water system of main pump of nuclear power station of claim 6, **characterized in that** an isolation valve is provided on the sewage pipeline and the isolation valve is in a closed state during normal operation.

8. The filtering device for emergency injection water system of main pump of nuclear power station of claim 1, **characterized in that** the water inlet port (120) has a rectangular structure, a vertical surface of the rectangular is tangent to inner wall of an annular groove (121) in the seat (12), and the injected water passing through the annular groove (121) enters the conical pipe (30) to form a swirling motion.

9. The filtering device for emergency injection water system of main pump of nuclear power station of claim 1, **characterized in that** the cover plate (26) is assembled to the seat (12) by bolts.

10. The filtering device for emergency injection water system of main pump of nuclear power station of claim 1, **characterized in that** the lower seal head (18) has a tapered structure.

## Patentansprüche

1. Filtervorrichtung für ein Notfalleinspritzungswassersystem einer Hauptpumpe eines Kernkraftwerks, **dadurch gekennzeichnet, dass** die Filtervorrichtung umfasst:
eine drucktragende Komponente, die einen Sitz (12), einen oberen Dichtungskopf (14), einen Zylinder (16) und einen unteren Dichtungskopf (18) umfasst, die der Reihe nach von oben nach unten fest miteinander verbunden sind, wobei der Sitz (12) eine Wassereinlassöffnung (120), eine Wasserauslassöffnung (122) und eine Überlauföffnung (124) und eine ringförmige Nut (121), beide in einer Mitte des Sitzes (12), definiert;
eine Abdeckplatte (26), die mit einer Oberseite des Sitzes (12) verbunden ist, wobei die Abdeckplatte (26) und der Sitz (12) gemeinsam eine Kammer (126) dazwischen definieren;
einen Dichtungsring (28), der zwischen der Abdeckplatte (26) und dem Sitz (12) sitzt;
ein konisches Rohr (30), das in den Sitz (12) und den oberen Dichtungskopf (14) eingebettet ist, wobei ein oberer Durchmesser des konischen Rohrs (30) einem Außendurchmesser der ringförmigen Nut (121) in dem Sitz (12) entspricht, wobei ein oberer Teil des Lochs des konischen Rohrs (30) mit der Überlauföffnung (124) bzw. der ringförmigen Nut (121) des Sitzes (12) in Verbindung steht und ein unterer Teil des konischen Rohrs (30) mit dem oberen Dichtungskopf (14) in Verbindung steht, und wobei Notwellendichtungseinspritzwasser vom Einlassflansch (20) in das konische Rohr (30) entlang einer tangentialen Richtung der Innenwand der ringförmigen Nut (121) in dem Sitz (12) unter der Einwirkung von Schwerkraft und Druck eintritt, um eine Wirbelbewegung zu erzeugen; und
eine Absetztrennkomponente (32) im Zylinder (16).

2. Filtervorrichtung für ein Notfalleinspritzungswassersystem einer Hauptpumpe eines Kernkraftwerks nach Anspruch 1, **dadurch gekennzeichnet, dass** die Absetztrennkomponente (32) eine schirmförmige Abwasserabscheideplatte (320), einen kegelförmigen Deflektor (322) und ein Filtersieb (324) umfasst, die schirmförmige Abwasserabscheideplatte (320) und der kegelförmige Deflektor (322) abwechselnd von oben nach unten angeordnet sind, die Anzahl der schirmförmigen Abwasserabscheideplatten (320) um mindestens eins größer ist als die Anzahl der kegelförmigen Deflektoren (322), und ein Filtersieb (324) unter der untersten schirmförmigen Abwasserabscheideplatte (320) sitzt.

3. Filtervorrichtung für ein Notfalleinspritzungswassersystem einer Hauptpumpe eines Kernkraftwerks nach Anspruch 2, **dadurch gekennzeichnet, dass** der kegelförmige Deflektor (322) durch Schweißen an dem Zylinder (16) befestigt ist, die schirmförmige Abwasserabscheideplatte (320) mit einer Vielzahl von Abstützungen (3200) versehen ist, die unterste schirmförmige Abwasserabscheideplatte (320) über die Abstützungen (3200) direkt an den Zylinder (16) geschweißt ist und die übrigen schirmförmigen Abwasserabscheideplatten (320) über die Abstützungen an den kegelförmigen Deflektor (322) geschweißt sind.

4. Filtervorrichtung für ein Notfalleinspritzungswassersystem einer Hauptpumpe eines Kernkraftwerks nach Anspruch 1, **dadurch gekennzeichnet, dass** die Wassereinlassöffnung (120) mit einem Einlassflansch (20) verbunden ist, die Wasserauslassöffnung (122) mit einem Auslassflansch (22) verbunden ist und eine Unterseite des unteren Dichtungskopfes (18) mit einem Abwasserauslassflansch (24) verbunden ist.

5. Filtervorrichtung für ein Notfalleinspritzungswassersystem einer Hauptpumpe eines Kernkraftwerks nach Anspruch 4, **dadurch gekennzeichnet, dass** der Sitz (12), der obere Dichtungskopf (14), der Zylinder (16), der untere Dichtungskopf (18), der Einlassflansch (20), der Auslassflansch (22) und der Abwasserauslassflansch (24) miteinander verschweißt sind.

6. Filtervorrichtung für ein Notfalleinspritzungswassersystem einer Hauptpumpe eines Kernkraftwerks nach Anspruch 5, **dadurch gekennzeichnet, dass** der Einlassflansch (20) mit einem Flansch einer Notfalleinspritzungswasserleitung verbunden ist, der Auslassflansch (22) mit einem Flansch einer Auslassleitung verbunden ist und der Abwasserauslassflansch (24) mit einem Flansch einer Abwasserleitung verbunden ist.

7. Filtervorrichtung für ein Notfalleinspritzungswassersystem einer Hauptpumpe eines Kernkraftwerks nach Anspruch 6, **dadurch gekennzeichnet, dass** an der Abwasserleitung ein Absperrventil vorgesehen ist und sich das Absperrventil während des Normalbetriebs in geschlossenem Zustand befindet.

8. Filtervorrichtung für ein Notfalleinspritzungswassersystem einer Hauptpumpe eines Kernkraftwerks nach Anspruch 1, **dadurch gekennzeichnet, dass** die Wassereinlassöffnung (120) eine rechteckige Struktur aufweist, eine vertikale Oberfläche des Rechtecks die Innenwand einer ringförmigen Nut (121) im Sitz (12) tangiert und das durch die ringförmige Nut (21) strömende, eingespritzte Wasser in das konische Rohr (30) eintritt, um eine Wirbelbewegung zu erzeugen.

9. Filtervorrichtung für ein Notfalleinspritzungswassersystem einer Hauptpumpe eines Kernkraftwerks nach Anspruch 1, **dadurch gekennzeichnet, dass** die Abdeckplatte (26) mit Schrauben an dem Sitz (12) montiert ist.

10. Filtervorrichtung für ein Notfalleinspritzungswassersystem einer Hauptpumpe eines Kernkraftwerks nach Anspruch 1, **dadurch gekennzeichnet, dass** der untere Dichtungskopf (18) eine sich verjüngende Struktur aufweist.

## Revendications

1. Dispositif de filtrage pour système d'eau d'injection de secours de la pompe principale d'une centrale nucléaire, **caractérisé en ce que** le dispositif de filtrage comprend :
un composant supportant la pression comprenant un siège (12), une tête d'étanchéité supérieure (14), un cylindre (16) et une tête d'étanchéité inférieure (18) reliés de manière fixe les uns aux autres de manière séquentielle de haut en bas, le siège (12) définissant un orifice d'entrée d'eau (120), un orifice de sortie d'eau (122), et un orifice de trop-plein (124) et une rainure annulaire (121) tous deux au milieu du siège (12) ;
une plaque de recouvrement (26) étant reliée à une partie supérieure du siège (12), la plaque de recouvrement (26) et le siège (12) définissant conjointement une chambre (126) entre eux ;
un joint d'étanchéité (28) placé entre la plaque de recouvrement (26) et le siège (12) ;
un tuyau conique (30) incorporé dans le siège (12) et la tête d'étanchéité supérieure (14), le diamètre supérieur du tuyau conique (30) correspondant au diamètre externe de la rainure annulaire (121) dans le siège (12), une partie supérieure du trou du tuyau conique (30) communiquant respectivement avec l'orifice de trop-plein (124) et la rainure annulaire (121) du siège (12), et une partie inférieure du tuyau conique (30) communiquant avec la tête d'étanchéité supérieure (14), et l'eau d'injection de joint d'arbre de secours provenant de la bride d'entrée (20) entrant dans le tuyau conique (30) le long de la direction tangentielle de la paroi interne de la rainure annulaire (121) dans le siège (12) sous l'action de la gravité et de la pression de manière à former un mouvement tourbillonnant ; et
un composant de séparation par décantation (32) dans le cylindre (16).

2. Dispositif de filtrage pour système d'eau d'injection de secours de la pompe principale d'une centrale nucléaire selon la revendication 1, **caractérisé en ce que** le composant de séparation par décantation (32) comprend une plaque de piège à eaux usées en forme de parapluie (320), un déflecteur conique (322) et un écran de filtrage (324), la plaque de piège à eaux usées en forme de parapluie (320) et le déflecteur conique (322) sont disposés en alternance de haut en bas, le nombre de plaques de piège à eaux usées en forme de parapluie (320) est au moins supérieur d'un au nombre des déflecteurs coniques (322), et un écran de filtrage (324) est placé en dessous de la plaque de piège à eaux usées en forme de parapluie (320) la plus basse.

3. Dispositif de filtrage pour un système d'eau d'injection de secours de la pompe principale d'une centrale nucléaire selon la revendication 2, **caractérisé en ce que** le déflecteur conique (322) est fixé au cylindre (16) par soudage, la plaque de piège à eaux usées en forme de parapluie (320) est dotée d'une pluralité de stabilisateurs (3200), la plaque de piège à eaux usées en forme de parapluie (320) la plus basse est directement soudée au cylindre (16) par l'intermédiaire des stabilisateurs (3200), et les plaques de piège à eaux usées en forme de parapluie (320) restantes sont soudées au déflecteur conique (322) par l'intermédiaire des stabilisateurs.

4. Dispositif de filtrage pour système d'eau d'injection de secours de la pompe principale d'une centrale nucléaire selon la revendication 1, **caractérisé en ce que** l'orifice d'entrée d'eau (120) est relié à une bride d'entrée (20), l'orifice de sortie d'eau (122) est relié à une bride de sortie (22), et une partie inférieure de la tête d'étanchéité inférieure (18) est reliée à une bride de sortie d'eaux usées (24).

5. Dispositif de filtrage pour système d'eau d'injection de secours de la pompe principale d'une centrale nucléaire selon la revendication 4, **caractérisé en ce que** le siège (12), la tête d'étanchéité supérieure (14), le cylindre (16), la tête d'étanchéité inférieure (18), la bride d'entrée (20), la bride de sortie (22) et la bride de sortie d'eaux usées (24) sont soudés les uns aux autres.

6. Dispositif de filtrage pour système d'eau d'injection de secours de la pompe principale d'une centrale nucléaire selon la revendication 5, **caractérisé en ce que** la bride d'entrée (20) est reliée à une bride d'une canalisation d'eau d'injection de secours, la bride de sortie (22) est reliée à une bride d'une canalisation de sortie, et la bride de sortie d'eaux usées (24) est reliée à une bride d'une canalisation d'eaux usées.

7. Dispositif de filtrage pour système d'eau d'injection de secours de la pompe principale d'une centrale nucléaire selon la revendication 6, **caractérisé en ce qu'**une vanne d'isolement est pourvue sur la canalisation d'eaux usées et la vanne d'isolement se trouve dans un état fermé pendant le fonctionnement normal.

8. Dispositif de filtrage pour système d'eau d'injection de secours de la pompe principale d'une centrale nucléaire selon la revendication 1, **caractérisé en ce que** l'orifice d'entrée d'eau (120) présente une structure rectangulaire, une surface verticale du rectangle étant tangente à la paroi interne d'une rainure annulaire (121) dans le siège (12), et l'eau injectée passant à travers la rainure annulaire (21) pénètre dans le tuyau conique (30) de manière à former un mouvement tourbillonnant.

9. Dispositif de filtrage pour système d'eau d'injection de secours de la pompe principale d'une centrale nucléaire selon la revendication 1, **caractérisé en ce que** la plaque de recouvrement (26) est assemblée au siège (12) par des boulons.

10. Dispositif de filtrage pour système d'eau d'injection de secours de la pompe principale d'une centrale nucléaire selon la revendication 1, **caractérisé en ce que** la tête d'étanchéité inférieure (18) présente une structure conique.
